# EUROPÄISCHE PATENTSCHRIFT

(11) **EP 1 726 847 B1**
(45) Veröffentlichungstag und Bekanntmachung des Hinweises auf die Patenterteilung: **24.06.2009**
(21) Anmeldenummer: 05011341.4
(22) Anmeldetag: 25.05.2005
(51) Int. Cl.: F16F 15/131

(54) **Kombination aus einem Torsionsschwingungsdämpfer und einer Kupplung**
Combination of a torsional vibration damper and a clutch
Combinaison d'un ammortisseur de torsion avec un embrayage

(43) Veröffentlichungstag der Anmeldung: 29.11.2006
(73) Patentinhaber: BorgWarner, Inc., Auburn Hills, MI 48326-2872 (US)
(72) Erfinder: Gerlach, Martin, 68526 Ladenburg (DE); Gold, Eckart, 68766 Hockenheim (DE)
(74) Vertreter: Wagner, Kilian

(56) Entgegenhaltungen:
- DE-A1- 19 522 718
- DE-A1- 19 957 978
- FR-A- 2 554 893
- US-A- 4 729 464

## Beschreibung

Die Erfindung betrifft eine Kombination aus einem Torsionsschwingungsdämpfer und einer Kupplung nach dem Oberbegriff des Patentanspruchs 1, wie sie beispielsweise aus der DE-A-199 57 978 bekannt ist.

Torsions- oder Drehschwingungsdämpfer sind aus dem Stand der Technik in einer Vielzahl von Abwandlungen und aus verschiedenen Anwendungsbereichen bekannt. Insbesondere werden sie im Kraftfahrzeugbau zur elastischen Kopplung von Verbrennungskraftmaschine und Antriebsstrang eingesetzt. Auf diese Weise soll verhindert werden, dass Schwingungen von der Seite der Verbrennungskraftmaschine auf den Antriebsstrang bzw. das Getriebe übertragen werden. Eine solche Übertragung von Schwingungen ist bei Kraftfahrzeugantrieben vor allen Dingen bei Verbrennungskraftmaschinen mit vergleichsweise wenig Zylindern und bei niedrigen Drehzahlen gegeben. Bei effektiver Dämpfung derartiger Schwingungen kann die Verbrennungskraftmaschine mit niedrigeren Drehzahlen betrieben werden, was im Allgemeinen einen verringerten Kraftstoffverbrauch zur Folge hat und somit sowohl ökonomisch als auch ökologisch von Vorteil ist.

Aus der EP 1 371 875 A1 und der DE 195 22 718 A1 sind Torsionsschwingungsdämpfer mit einem antriebsseitigen Primärelement und einem abtriebsseitigen Sekundärelement bekannt, wobei Primär- und Sekundärelement über eine Federeinrichtung miteinander gekoppelt und um eine Neutralposition gegeneinander verdrehbar sind. Primär- wie Sekundärelement umfassen jeweils wenigstens einen Mitnehmer, welche im Folgenden als Primärmitnehmer bzw. Sekundärmitnehmer bezeichnet werden. Ein antriebsseitig am Primärelement anliegendes Drehmoment wird mittels des Primärmitnehmers zunächst auf die Federeinrichtung und von dort auf den Sekundärmitnehmer des Sekundärelements übertragen.

Die genannte Federeinrichtung besteht üblicherweise aus einem oder mehreren in Umfangsrichtung des Torsionsschwingungsdämpfers hintereinander angeordneten Federelementen, welche vorzugsweise als Schraubenfedern bzw. Schraubenfedersätze ausgeführt sind. Zwischen den Federelementen sind Gleitschuhe angeordnet, welche die aufeinander folgenden Federelemente miteinander verbinden. An den Federeinrichtungen sind beidendseitig Endschuhe angeordnet, welche die Federeinrichtung gegen die jeweiligen Mitnehmer abstützen. Anstelle von Gleitschuhen können auch sogenannte Dividerbleche vorgesehen sein, um die einzelnen Federelemente voneinander zu trennen. Unterschiedliche Ausführungsvarianten sind z.B. in der nach veröffentlichten europäischen Patentanmeldung mit der Anmeldenummer 04 008 489.9 beschrieben.

Erfolgt in einem Torsionsschwingungsdämpfer eine Drehmomentübertragung vom mit dem Antrieb verbundenen Primärelement zum abtriebsseitigen Sekundärelement, so wird diese Drehmomentübertragung als Schub bezeichnet. Eine Drehmomentübertragung in die entgegengesetzte Richtung vom Sekundärelement auf das Primärelement wird Zug genannt.

Wird ein derartiger Dämpfer mit einer Abtriebswelle eines Getriebes unmittelbar oder z.B. unter Zwischenschaltung einer Kupplung, z.B. einer Doppelkupplung, gekoppelt, so beobachtet man immer wieder eine erhöhte Neigung zum vorzeitigen Verschleiß der dem Torsionsschwingungsdämpfer nachgeschalteten Komponenten. Diese erhöhte Neigung zum vorzeitigen Verschleiß geht in aller Regel mit einer erhöhten Geräuschentwicklung des Systems Torsionsschwingungsdämpfer - Getriebe bzw. Torsionsschwingungsdämpfer - Kupplung - Getriebe einher.

Eine weitere Geräuschquelle ergibt sich aus ungenügend gelagerten Massen, die zu größeren Unwuchten führen können.

Der Erfindung liegt nunmehr die Aufgabe zugrunde, einen Torsionsschwingungsdämpfer der gattungsgemäßen Art derart auszuführen und weiterzubilden, dass abtriebsseitig angeschlossene Komponenten und der Torsionsschwingungsdämpfer selbst weniger zu frühzeitigem Verschleiß neigen als Systeme bzw. Torsionsschwingungsdämpfer nach dem Stand der Technik.

Diese Aufgabe wird bei einer erfindungsgemäßen Kombination aus einem Torsionsschwingungsdämpfer und einer Kupplung mit den Merkmalen des kennzeichnenden Teils des Patentanspruchs 1 gelöst.

Vorteilhafte Ausführungen und Weiterbildungen der Erfindung sind in dem Unteranspruch 2 angegeben.

Die Erfindung beruht auf der Erkenntnis, dass bei Torsionsschwingungsdämpfern im allgemeinen zwischen Primärelement und Sekundärelement ein radiales Spiel besteht. Darüber hinaus besteht stets z.B. aufgrund von Fertigungstoleranzen die Gefahr des Auftretens von Unwuchten bei rotierenden Teilen, wie sie Primärelement und Sekundärelement darstellen. Darüber hinaus treten in aller Regel auch radiale Versätze zwischen einer den Torsionsschwingungsdämpfer primärseitig antreibenden Welle, den Primär- und Sekundärelementen selbst sowie den nachgeschalteten Komponenten, wie z.B. einer Abtriebswelle oder einer nachgeschalteten Kupplung auf. Sofern zwischen Torsionsschwingungsdämpfer und den nachgeschalteten Komponenten eine vergleichsweise starre Verbindung besteht, verursachen Unwuchten, radiale Versätze oder dergleichen radiale Kräfte, welche vom Torsionsschwingungsdämpfer an die nachgeschalteten Komponenten weitergegeben werden.

Die Erfindung sieht nunmehr eine Einrichtung zum Aufnehmen bzw. Kompensieren dieser radialen Kräfte vor, welche Bestandteil des Sekundärelements des Torsionsschwingungsdämpfers ist. Eine derartige Kompensationseinrichtung oder Kraftaufnahmeeinrichtung verhindert, dass die parasitär auftretenden radialen Kräfte an nachgeschaltete Komponenten, insbesondere z.B. an eine nachgeschaltete Kupplung, weitergegeben werden.

Eine Kompensationseinrichtung oder Kraftaufnahmeeinrichtung der erfindungsgemäßen Art lässt sich dadurch realisieren, dass das Sekundärelement selbst drehbar gelagert ist. Dies bedeutet, dass die Lagerung nicht unter Vermittlung von Bestandteilen nachgeschalteter, insbesondere vermittels des Torsionsschwingungsdämpfers angetriebener, Komponenten erfolgt. Geht man also von einer Kombination eines Torsionsschwingungsdämpfers und einer Kupplung, z.B. einer Doppelkupplung, aus, so ist erfindungsgemäß vorgesehen, dass nicht (nur) die Kupplung oder Teile der Kupplung entsprechend gelagert sind, sondern dass die Sekundärseite des Torsionsschwingungsdämpfers vorzugsweise im Momentenübergabebereich zwischen Torsionsschwingungsdämpfer und Kupplung lagernd abgestützt ist. In der Fachsprache kann diese lagernde Abstützung auch als Ablagerung der Sekundärseite des Torsionsschwingungsdämpfers bezeichnet werden. Die in der Sekundärseite des Dämpfers auftretenden Kräfte aufgrund von Unwuchten oder dergleichen werden auf diese Weise innerhalb des Drehschwingungsdämpfers aufgefangen. Die zusätzlich vorhandene Lagerstelle ist quasi in die Konstruktion aus Dämpfer und Kupplung integriert.

Ein weiterer Vorteil der Ablagerung der Sekundärseite des Dämpfers an oder vor der Momentenübergabestelle zur nachgeschalteten Kupplung besteht darin, dass das Kupplungsgesamtspiel unabhängig von der Spieleinstellung am Torsionsschwingungsdämpfer eingestellt werden kann. Dies führt wiederum dazu, dass Dämpferkonstruktionen verwendet werden können, welche vollständig auf eine Spieleinstellung verzichten bzw. deren Primärseite als Flexelement die Kupplungsdämpfereinheit unabhängig von Axialbewegungen der Antriebswelle, insbesondere z.B. einer Kurbelwelle, macht.

Als besonders vorteilhaft hat es sich herausgestellt, dass das Sekundärelement radial gelagert ist. Rein radiale Kräfte werden auf diese Weise sicher von den nachfolgenden Komponenten abgeschirmt. Axiale Versätze oder ein axiales Spiel führt nicht zwangsläufig zu einem erhöhten Verschleiß. Ein derartiges axiales Spiel ist unter Umständen sogar erwünscht. Axiale Versätze oder ein axiales Spiel werden von einer radialen Lagerung, insbesondere von einem Radiallager, nicht aufgenommen.

Das Sekundärelement umfasst ein der Abtriebsseite zugewandtes Sekundärteilelement, das drehbar, insbesondere radial, gelagert ist. Eine Kopplung zwischen dem der Abtriebsseite zugewandten Sekundärteilelement und der nachgeschalteten Komponente, d.h. der nachgeschalteten Kupplung, ermöglicht eine Abfederung/Kompensation von vom Torsionsschwingungsdämpfer kommenden radialen Kräften unmittelbar an der Momentenübergabestelle. Eine Schädigung der nachgeschalteten Komponenten, insbesondere der Kupplung, wird auf diese Weise effizientest verhindert.

Alternativ oder zusätzlich zu dieser eben beschriebenen Ausgestaltung sieht die Erfindung vor, dass das Sekundärelement ein der Antriebsseite zugewandtes Sekundärteilelement umfasst und dass das der Antriebsseite zugewandte Sekundärteilelement drehbar, insbesondere radial, gelagert ist. Die Alternativvariante kann aus Platzgründen vorteilhaft sein, die Zusatzvariante garantiert eine noch wirkungsvollere Abschirmung radialer Kräfte auf nachgeschaltete Bauelemente, insbesondere eine nachgeschaltete (Doppel-) Kupplung.

Es sind Lagerkonzepte unterschiedlichster Art denkbar. In der Erfindung ist vorgesehen, dass das Sekundärelement, insbesondere das der Abtriebsseite zugewandte Sekundärteilelement und/oder das der Antriebsseite zugewandte Sekundärteilelement, mittelbar oder unmittelbar auf einer Welle drehbar, insbesondere radial, gelagert ist. Diese Art der Lagerung zeichnet sich dadurch aus, dass durch die koaxiale Positionierung sehr kleine Unwuchten erzielt werden können. Außerdem kann bei einer mittelbaren Lagerung über die Nabe des Innenlamellenträgers der radial äußeren Kupplung die Montierbarkeit des Kupplungsmoduls erleichtert werden.

Das Sekundärelement, insbesondere das der Abtriebsseite zugewandte Sekundärteilelement und/oder das der Antriebsseite zugewandte Sekundärteilelement, ist mittelbar oder unmittelbar auf einer Kupplungsnabe einer über den Torsionsschwingungsdämpfer mittelbar oder unmittelbar antreibbaren Kupplung, insbesondere Doppelkupplung, drehbar, insbesondere radial, gelagert. Vorteilhaft bei dieser Art von Lagerung ist, dass eine axial kurze Bauform realisiert werden kann.

In einer weiteren Ausführungsvariante ist alternativ oder zusätzlich vorgesehen, das Sekundärelement, insbesondere das der Abtriebsseite zugewandte Sekundärteilelement und/oder das der Antriebsseite zugewandte Sekundärteilelement, mittelbar öder unmittelbar auf einem, vorzugsweise nicht drehenden, den Torsionsschwingungsdämpfer tragenden Träger drehbar, insbesondere radial, zu lagern. Diese Art der Lagerung zeichnet sich dadurch aus, dass die Radialkräfte mittelbar oder unmittelbar vom Träger aufgenommen werden können.

Als Beispiel einer Lagerung des Sekundärelements auf einer Welle kommt im Unterschied zum Erfindungsgegenstand die Lagerung auf einer Getriebeeingangswelle in Betracht, welche von dem Torsionsschwingungsdämpfer angetrieben wird. Selbstverständlich kann man sich auch vorstellen, das Sekundärelement auf einer den Torsionsschwingungsdämpfer selbst antreibenden Antriebswelle zu lagern. Schließlich wäre es auch möglich, den Torsionsschwingungsdämpfer auf einer den Torsionsschwingungsdämpfer zwar axial durchsetzenden Welle zu lagern, welche jedoch den Torsionsschwingungsdämpfer weder mittelbar noch unmittelbar antreibt und welche auch von dem Torsionsschwingungsdämpfer weder mittelbar noch unmittelbar angetrieben wird. Die Vorteile für die Lagerung auf den vorstehend angegebenen Wellen bestehen darin, dass durch die Ausrichtung der Sekundärseite auf die antreibenden oder angetriebenen Wellen geringe Exzentrizitäten und damit Unwuchten realisiert werden können.

Anstelle einer unmittelbaren Lagerung auf einer Welle kommt auch die Lagerung des Sekundärelements unter Vermittlung einer der vorstehend angegebenen Wellen in Betracht. Das sekundärelement, insbesondere das der Abtriebsseite zugewandte Sekundärteilelement und/oder das der Antriebsseite zugewandte Sekundärteilelement, könnte mittelbar oder unmittelbar auf einer Primärnabe des Primärelements drehbar, insbesondere radial, gelagert sein. Diese sich vom Erfindungsggenstand unterscheidende Variante zeichnet sich dadurch aus, dass durch die Ausrichtung der sekundärseitigen Teile auf die primärseitigen Teile die sekundärseitige und primärseitige Drehachse identisch ist und damit eine Schädigung der Dämpferkomponenten durch Verschleiß effizientest verhindert wird.

Eine Alternativlagerung besteht darin, das Sekundärelement, insbesondere das der Abtriebsseite zugewandte Sekundärteilelement und/oder das der Antriebsseite zugewandte Sekundärteilelement, mittelbar oder unmittelbar auf einer Lamellenträgernabe eines Lamellenträgers einer über den Torsionsschwingungsdämpfer mittelbar oder unmittelbar antreibbaren Kupplung, insbesondere Doppelkupplung, drehbar, vorzugsweise radial, zu lagern. Ein Vorteil dieser Art von Lagerung besteht darin, dass durch die koaxiale Positionierung sehr kleine Unwuchten erzielt werden können. Außerdem kann bei einer mittelbaren Lagerung über die Nabe des Innenlamellenträgers der radial äußeren Kupplung die Montierbarkeit des Kupplungsmoduls erleichtert werden.

Neben einer radialen Lagerung des Sekundärelements sieht die Erfindung auch als Alternative oder zusätzlich vor, das Sekundärelement, insbesondere das der Abtriebsseite zugewandte Sekundärteilelement und/oder das der Antriebsseite zugewandte Sekundärteilelement, axial zu lagern. Bei entsprechender Abstützung können axiale Kräfte aufgenommen werden, welche ursächlich auf radiale Versätze oder Unwuchten zurückzuführen sind. Bis zu einem gewissen Grad lassen sich durch eine derartige Lagerung vorzeitige Verschleißerscheinungen des Dämpfers und nachgeschalteter Komponenten mildern. Darüber hinaus ermöglicht eine derartige Lagerung eine axiale Positionierung der von dem Dämpfer angetriebenen Komponenten, z.B. einer Kupplung, in Bezug auf den Dämpfer.

Eine axiale Lagerung lässt sich zumindest einseitig sehr einfach dadurch bewerkstelligen, dass das Sekundärelement, insbesondere das der Abtriebsseite zugewandte Sekundärteilelement und/oder das der Antriebsseite zugewandte Sekundärteilelement, an dem Primärelement axial gelagert ist.

Geht man nunmehr von einer Kopplung Torsionsschwingungsdämpfer - Kupplung aus, so ist es günstig, wenn das Sekundärelement, insbesondere das der Abtriebsseite zugewandte Sekundärteilelement und/oder das der Antriebsseite zugewandte Sekundärteilelement, wenigstens einseitig an einem Lamellenträger der Kupplung axial gelagert ist. Diese Variante zeichnet sich dadurch aus, dass eine besonders kompakte Bauweise möglich ist.

Während es grundsätzlich möglich ist, das Sekundärelement des Torsionsschwingungsdämpfers bei der eben beschriebenen Variante andersseitig z.B. am Primärelement zu lagern, hat es sich für manche Anwendungsfälle als günstig erwiesen, das Sekundärelement, insbesondere das der Abtriebsseite zugewandte Sekundärteilelement und/oder das der Antriebsseite zugewandte Sekundärteilelement, einseitig an einem ersten Lamellenträger der Kupplung und andersseitig an einem zweiten Lamellenträger der Kupplung axial zu lagern. Diese Ausführungsvariante zeichnet sich dadurch aus, dass auch axiale Kräfte effizient abgestützt werden können.

Die Erfindung wird nunmehr anhand der Zeichnungen näher beschrieben. Für gleiche oder funktionsgleiche Bestandteile werden in allen Figuren identische Bezugszeichen verwendet. Es zeigen:
- Figur 1:: Ein erstes Ausführungsbeispiel einer erfindungsgemäßen Kombination aus einem Torsionsschwingungsdämpfer und einer Doppelkupplung im Axialhalbschnitt,
- Figur 2:: ein zweites Ausführungsbeispiel einer nicht erfindungsgemäßen Kombination aus einem Torsionsschwingungsdämpfer und einer Doppelkupplung im Axialhalbschnitt,
- Figur 3:: ein drittes Ausführungsbeispiel einer erfindungsgemäßen Kombination aus einem Torsionsschwingungsdämpfer und einer Doppelkupplung im Axialhalbschnitt,
- Figur 4:: ein viertes Ausführungsbeispiel einer erfindungsgemäßen Kombination aus einem Torsionsschwingungsdämpfer und einer Doppelkupplung im Axialhalbschnitt.

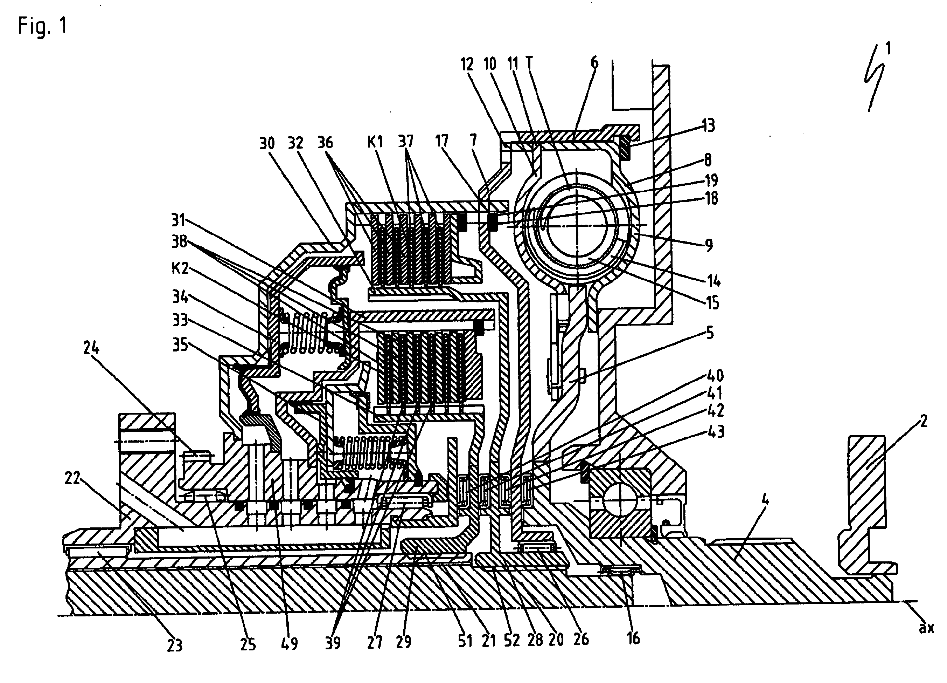

Die Figur 1 zeigt ein erstes Ausführungsbeispiel einer erfindungsgemäßen Kombination 1 aus einem Torsionsschwingungsdämpfer T und einer Doppelkupplung K1, K2 in radial umgreifender Bauweise im Axialhalbschnitt. Diese Kombination aus Torsionsschwindungsdämpfer T und Doppelkupplung mit den beiden geschachtelt angeordneten Einzelkupplungen K1, K2 wird der Einfachheit halber nachfolgend als Doppelkupplungseinrichtung bezeichnet.

Der Torsionsschwingungsdämpfer gemäß dieser Zeichnungsfigur 1 ist grundsätzlich in an sich üblicher Art und Weise ausgebildet. Er umfasst ein Primärelement 5 in der Art einer Scheibe sowie ein Sekundärelement 6 mit im vorliegenden Ausführungsbeispiel 3 Halbschalen 7, 8, 9, 10, welche miteinander drehfest verbunden sind. Primär- und Sekundärelemente 5, 6 sind über eine Federeinrichtung miteinander gekoppelt und um eine Neutralposition gegeneinander verdrehbar. Die Federeinrichtung besteht im vorliegenden Ausführungsbeispiel aus einer Mehrzahl in Umfangsrichtung hintereinander angeordneter Schraubenfedern 14, 15, welche mit Hilfe von sogenannten hier nichtdargestellten Gleitschuhen voneinander beabstandet sind. Es sind Schraubenfedern 14, 15 mit unterschiedlichem Federdurchmesser vorhanden. Ein Satz Schraubenfedern mit großem Durchmesser ist in dem Ausführungsbeispiel mit dem Bezugszeichen 14 versehen, ein Satz Schraubenfedern mit kleinem Durchmesser ist in der Zeichnungsfigur mit dem Bezugszeichen 15 gekennzeichnet. Jeweils eine Schraubenfeder 14 mit großem Durchmesser ist von einer Schraubenfeder 15 mit kleinem Durchmesser zentral durchsetzt. Jeweils ein Federnpaar aus äußerer Schraubenfeder 14 und innerer Schraubenfeder 15 schließt endseitig jeweils an einen der hier nicht dargestellten Gleitschuhe oder Endschuhe an.

Primär- und Sekundärelemente 5, 6 umfassen jeweils in diametraler Anordnung zwei Mitnehmer, welche jeweils zwischen die in Umfangsrichtung verlaufende aus Schraubenfedern 14, 15 bestehende Kette eingreifen, so dass ein antriebsseitig am Primärelement 5 anliegendes Drehmoment mittels eines in der Figur 1 nicht dargestellten Primärmitnehmers zunächst auf die Federkette aus Schraubenfedern 14, 15 und von dort auf einen ebenfalls nicht dargestellten Sekundärmitnehmer des Sekundärelements 6 übertragen werden kann.

Wie oben bereits erwähnt, umfasst das Sekundärelement 6 drei Einzelteile, nämlich eine antriebsseitige Halbschale 9, eine abtriebsseitige Halbschale 10 sowie eine weitere nachfolgend als abtriebsseitiges Sekundärteilelement 7 bezeichnete Halbschale 7. Die beiden erstgenannten Halbschalen, nämlich die antriebsseitige Halbschale 9 und die abtriebsseitige Halbschale 10 sind derart ausgebildet, dass sie die Kette aus Schraubenfedern 14, 15 im Wesentlichen formschlüssig aufnehmen. Beide Halbschalen 9, 10 sind über eine Verzahnung 11 drehfest miteinander verbunden. Diese beiden Halbschalen 9, 10 dienen zur vorzugsweise reibungsarmen Führung der Federn 14, 15 bzw. der zwischen den Federpaaren 14, 15 in Umfangsrichtung angeordneten Gleitschuhe und Endschuhe.

Im vorliegenden Ausführungsbeispiel ist neben diesen beiden die Federn 14, 15 aufnehmenden Halbschalen 9, 10 eine weitere Halbschale 7 auf der Abtriebsseite des Torsionsschwingungsdämpfers T vorgesehen. Diese Halbschale 7 stellt ein Koppelelement für die dem Torsionsschwingungsdämpfer T nachgeschaltete Komponenten, also im vorliegenden Fall für die Doppelkupplung K1, K2, dar. Die Halbschale 7 ist ähnlich der Halbschale 10 über eine Verzahnung 12 mit der antriebsseitigen Halbschale 9 drehfest verbunden. Sie übergreift die Halbschale 9 im radial äußeren Bereich. Mit Hilfe eines Sicherungsrings 13 und einer hier nichtdargestellten Feder zwischen den beiden Halbschalen 7, 10 erfolgt eine axial federnde Fixierung und Verbindung der drei das Sekundärelement 6 bildenden Halbschalen 7, 9, 10.

Auch die Doppelkupplung in radial geschachtelter Anordnung ist in an sich üblicher Weise aufgebaut. Sie umfasst eine radial äußere Kupplung K1 und eine radial innere Kupplung K2.

Die radial äußere Kupplung K1 umfasst einen Außenlamellenträger 30 sowie einen Innenlamellenträger 32. Beide Lamellenträger 30, 32 sind in der Art von Halbschalen ausgebildet. Der zylindrische Teil des Außenlamellenträgers 30 weist am Innenumfang eine Verzahnung auf. In diese Verzahnung greift jeweils eine entsprechende Außenverzahnung im vorliegenden Ausführungsbeispiel als Stahllamellen ausgeführter Außenlamellen 36 ein. In korrespondierender Weise weist der zylindrische Teil des Innenlamellenträgers 32 an dessen Außenumfang eine Verzahnung auf, in welche eine entsprechende Innenverzahnung hier als Belaglamellen ausgeführter Innenlamellen 37 eingreift. Außenlamellen 36 und Innenlamellen 37 sind derart zwischen die zylindrischen Bereiche der Außen- bzw. Innenlamellenträger 30, 32 eingeführt, dass in Achsrichtung jeweils auf eine Außenlamelle 36 eine Innenlamelle 37 folgt und umgekehrt. Die Außen- und Innenlamellen 36, 37 sind mittels eines Betätigungskolbens 34 in Reibeingriff und außer Reibeingriff verbringbar.

Auch die radial innere Kupplung K2 ist in an sich gleicher Weise wie die radial äußere Lamellenkupplung K1 ausgeführt. Auch hier ist ein halbschalenförmiger Außenlamellenträger 31 und ein halbschalenförmiger Innenlamellenträger 33 vorgesehen. Der zylindrische Teil des Außenlamellenträgers 31 weist innenumfangsseitig eine Verzahnung auf, in welche eine Außenverzahnung entsprechender als Stahllamellen ausgeführter Außenlamellen 38 eingreifen. Korrespondierend hierzu weist der zylindrische Abschnitt der Innenlamellenträgerhalbschale 33 eine Außenverzahnung auf, welche die Innenverzahnungen entsprechender Innenlamellen 39 aufnehmen kann. Jeweils eine Innenlamelle 39 ist benachbart zu zwei Außenlamellen 38 und jeweils eine Außenlamelle 38 ist benachbart zu einer Innenlamelle 39 ein Lamellenpaket bildend angeordnet. Die Außen- und Innenlamellen 38, 39 können mit Hilfe eines Betätigungskolbens 35 in Reibeingriff und außer Reibeingriff verbracht werden.

Die Lamellenpakete der radial äußeren Kupplung K1 und der radial inneren Kupplung K2 sind zueinander in radial geschachtelter Weise angeordnet. Dies bedeutet, dass sich das Lamellenpaket der radial inneren Kupplung K2 radial innerhalb des Lamellenpakets der radial äußeren Kupplung K1 und in etwa im gleichen axialen Abschnitt befindet.

Die beiden Außenlamellenträger 30, 31 der radial äußeren Kupplung K1 und der radial inneren Kupplung K2 sind über eine Kupplungsnabe 49 drehfest miteinander verbunden. Diese Kupplungsnabe 49, welche im Wesentlichen die Form eines Zylinders aufweist, ist am Außenumfang eines feststehenden und in der Fachsprache im Allgemeinen als Kupplungssupport 22 bezeichneten Trägers drehbar gelagert. Die drehbare Lagerung erfolgt über zwei Radialnadellager 25, 27. Dieser stehende Support 22 ist ebenfalls im Wesentlichen hohlzylindrisch ausgebildet. Er wird von zwei sich koaxial durchsetzenden Getriebeeingangswellen durchsetzt, welche in der Figur 1 zwar nicht gezeichnet sind, deren Position jedoch durch die beiden Bezugszeichen 20 und 21 gekennzeichnet sind.

Auf der inneren Getriebeeingangswelle 20, einer Vollwelle, ist das Primärelement 5 des Torsionsschwingungsdämpfers T über einen entsprechenden Primärflansch 4 drehbar gelagert. Die Lagerung wird im vorliegenden Ausführungsbeispiel mit Hilfe eines Radialnadellagers 16 realisiert.

Die beiden Getriebeeingangswellen, nämlich die Hohlwelle 21 und die Vollwelle 20, sind drehfest jeweils mit einem der Innenlamellenträger 32, 33 einer der beiden Kupplungen K1, K2 verbunden. Zu diesem Zweck weisen die Innenlamellenträger 32, 33 entsprechende Naben 28, 29 auf, welche am Innenumfang jeweils eine Steckverzahnung 51, 52 zur Aufnahme entsprechender Verzahnungen der Getriebeeingangswellen 20, 21 aufweisen.

Der Außenlamellenträger 30 der radial äußeren Kupplung K1 stellt nunmehr die Eingangsseite der Doppelkupplung dar. Die beiden Innenlamellenträger 32, 33 der Kupplungen K1, K2 bilden die Ausgangsseiten der Doppelkupplung. Ein über den Außenlamellenträger 30 eingeleitetes Drehmoment kann demzufolge wahlweise je nach Stellung der beiden Betätigungskolben 34, 35 auf eine der beiden Innenlamellenträger 32, 33 und von dort weiter über die entsprechenden Naben 28, 29 auf die Getriebeeingangswellen 20, 21 übertragen werden.

Aus dem Stand der Technik ist es bekannt, das abtriebsseitige Sekundärteilelement 7 und den Außenlamellenträger 30 der äußeren Kupplung K1 an dem durch das Bezugszeichen 17 gekennzeichneten Ort mit Hilfe einer Schweißnaht zu verbinden. Eine andere Ausführung besteht darin, den Außenlamellenträger 30 und das abtriebsseitige Sekundärteilelement 7 einstückig auszuführen. In beiden Fällen fehlt der radial innerhalb des durch das Bezugszeichen 17 gekennzeichneten Orts liegende Blechteil des Sekundärteilelements 7. Ein von einem Verbrennungsmotor erzeugtes und über eine Kurbelwelle 2 auf den Drehschwingungsdämpfer T übertragenes Drehmoment kann damit durch den Torsionsschwingungsdämpfer T gedämpft wahlweise auf eine der beiden Getriebeeingangswellen 20, 21 übertragen werden.

Es hat sich nunmehr bei der eben beschriebenen Ausführungsvarianten gemäß dem Stand der Technik gezeigt, dass vor allem die in der Sekundärseite des Dämpfers T auf Grund von Unwuchten auftretenden Kräfte nicht innerhalb des Dämpfers T aufgefangen werden können. Die Erfindung setzt nunmehr bei dieser Problematik an:
Das abtriebsseitige Sekundärteilelement 7 ist bei dieser Ausführungsvariante gemäß der Figur 1 nicht lediglich als schmaler Ring mit vergleichsweise geringen radialen Abmessungen ausgeführt, sondern das Sekundärteilelement 7 erstreckt sich bis nahe an den Außenradius der Nabe 28. In diesem radial inneren Bereich weist das abtriebsseitige Sekundärteilelement 7 eine zylindrische Form auf. Zwischen dem Innenumfang dieses zylindrischen Abschnitts des abtriebsseitigen Sekundärelements 7 und dem Außenumfang der Innenlamellenträgernabe 28 ist ein Radialnadellager 26 eingesetzt. Diese Lagerstelle stützt das abtriebsseitige Sekundärteilelement 7 radial ab und verhindert eine Übergabe radialer Kräfte auf den Außenlamellenträger 30 der radial äußeren Kupplung K1 der Doppelkupplung.

Um jegliche radiale Kräfte von der Doppelkupplung, insbesondere dem Außenlamellenträger 30 der radial äußeren Kupplung K1 fernzuhalten, besteht keine starre Verbindung zwischen dem Außenlamellenträger 30 der radial äußeren Kupplung K1 und dem abtriebsseitigen Sekundärteilelement 7. Vielmehr weist das offene Ende des Außenlamellenträgers 30 der radial äußeren Kupplung K1 eine Verzahnung auf, welche in eine entsprechende Verzahnung des abtriebsseitigen Sekundärteilelements 7 mit radialem Spiel eingreift.

Zwischen den abschnittsweise im Wesentlichen radial verlaufenden Innenlamellenträgern 32, 33 und dem abtriebsseitigen Sekundärteilelement 7 sind Axialnadellager 41, 42 vorgesehen, welche die Innenlamellenträger 31, 32 und das abtriebsseitige Sekundärteilelement 7 axial beabstanden. Zwischen dem abtriebsseitigen Sekundärteilelement 7 und dem Primärelement 5 befindet sich ein weiteres Axialnadellager 43. Ebenso ist ein Axialnadellager zwischen dem Innenlamellenträger 33 der radial inneren Kupplung K2 und einer drehfest mit dem Kupplungssupport 22 verbundenen Halbschale 53 vorgesehen. Diese Axialnadellager 40, 41, 42, 43 dienen zum einen zur reibungsarmen Führung der gegeneinander drehbeweglichen Halbschalen 33, 32, 7, 5 als auch zur Abstützung in axialer Richtung, wobei die Einstellung der axialen Spiels mit Hilfe eines Sicherungsrings 18 und einer Tellerfeder 19 an der Übergabestelle 17 des Drehmoments vom Torsionsschwingungsdämpfer T auf den Außenlamellenträger 30 der äußeren Kupplung K1 erfolgt.

Aus dem in der Figur 1 gezeigten Ausführungsbeispiel zeigt sich dass sich die Erfindung ohne weiteres durch die Verwendung vorhandener Blechteile, mit deren Hilfe das abtriebsseitige Sekundärteilelement 7 in Form eines zusätzlichen Deckels geformt wird, realisieren lässt. So kann von einem bestehenden Dämpfergehäuse, welches bisher auf großen Durchmesser ausgestanzt wurde und/oder mit dem Außenlamellenträger der äußeren Kupplung K1 verbunden wurde, der innere Bereich der Platine verwendet werden, um die notwendige Deckelform herzustellen. Durch geschickte Anordnung der Blechteile kann die erfindungsgemäße Lagerstelle nahezu bauraumneutral ausgeführt sein.

Des Weiteren ermöglicht die Erfindung die Einstellung des Kupplungsgesamtspiels unabhängig von der Dämpferspieleinstellung zu gestalten. Dies wiederum ermöglicht den Einbau von Dämpferkonstruktionen, die vollkommen auf eine Spieleinstellung verzichten bzw. deren Primärseite als Flexelement die Kupplungsdämpfereinheit unabhängig von Axialbewegungen der Kurbelwelle macht.

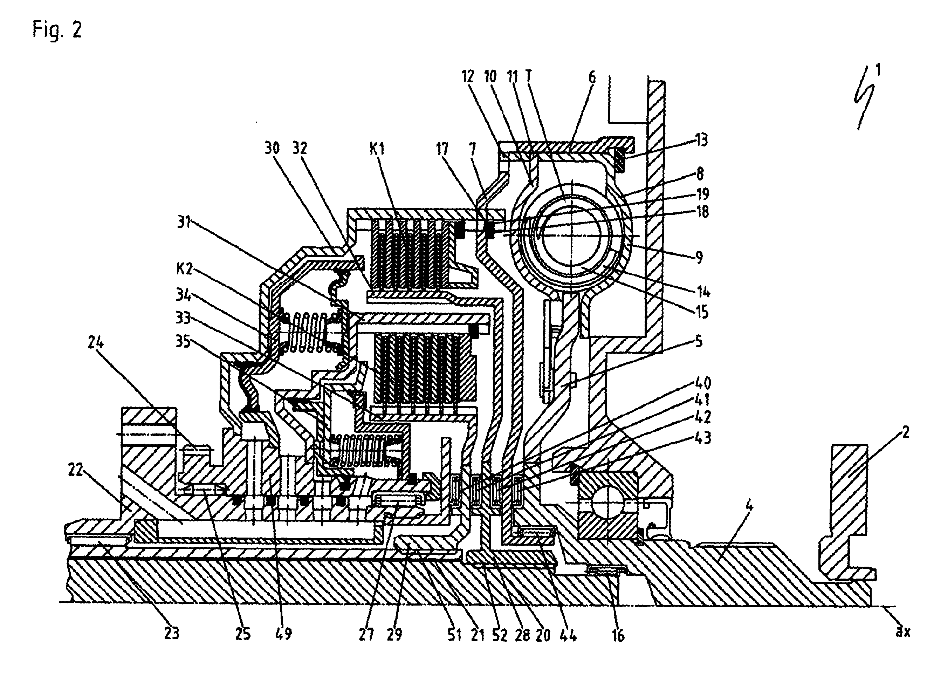

Die Figur 2 zeigt ein weiteres Ausführungsbeispiel einer erfindungsgemäßen Kombination 1 aus einem Torsionsschwingungsdämpfer T und einer Doppelkupplung K1, K2 in radial geschachtelter Anordnung im Axialhalbschnitt. Die gesamte Doppelkupplungseinrichtung 1 nach der Figur 2 ist nahezu identisch ausgeführt, wie die Kombination aus Torsionsschwingungsdämpfer T und Doppelkupplung K1, K2 gemäß der Figur 1. Was die übereinstimmenden Bestandteile betrifft, wird daher auf eine nochmalige Beschreibung verzichtet.

Die nicht erfindungsgemäße Ausführungsvariante gemäß der Figur 2 unterscheidet sich von der gemäß der Figur 1 lediglich dadurch, dass sich hier zwischen dem abtriebsseitigen Sekundärteilelement 7 und der Nabe 28 des Innenlamellenträgers 32 der radial äußeren Kupplung K1 kein Radialnadellager 26 befindet. Vielmehr ist anstelle dieses Radialnadellagers 26 ein Radialnadellager 44 zwischen dem Außenumfang des hohlzylindrisch ausgeführten radial inneren Endes des abtriebsseitigen Sekundärteilelements 7 und einem Innenumfang des Primärflansch 4 des Primärelements 5 angeordnet. Auch hier findet eine Aufnahme radialer, über den Torsionsschwingungsdämpfer T eingeleiteter radialer Kräfte statt.

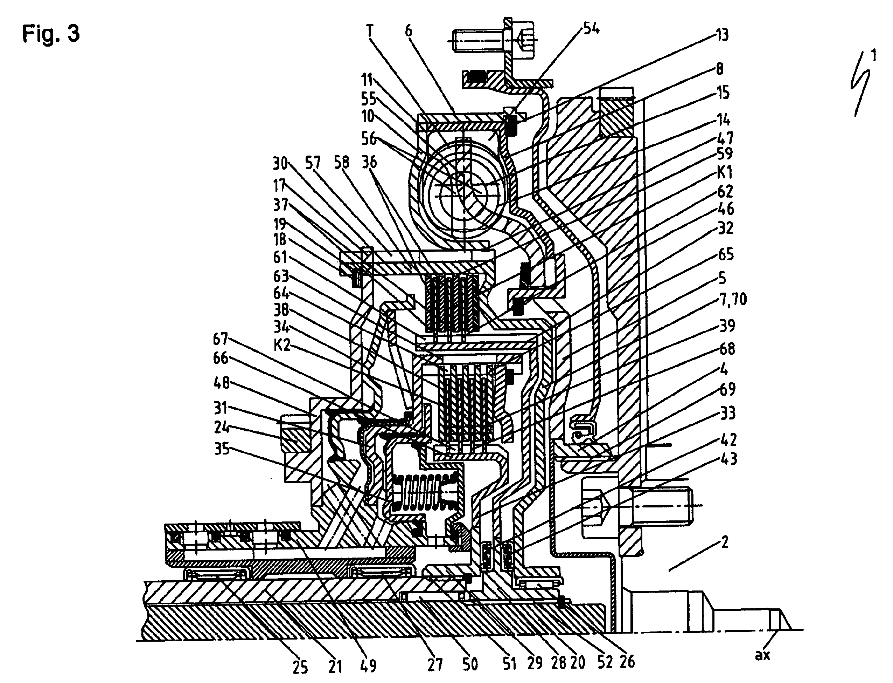

Die Figur 3 zeigt ein drittes Ausführungsbeispiel einer erfindungsgemäßen Kombination 1 aus einem Torsionsschwingungsdämpfer T und einer Doppelkupplung K1, K2 in radial geschachtelter Anordnung im Axialhalbschnitt. Auch der Torsionsschwingungsdämpfer T gemäß dieser Zeichnungsfigur 3 ist grundsätzlich in an sich üblicher Art und Weise ausgebildet. Er umfasst ein Primärelement 5 in der Art einer Scheibe sowie ein Sekundärelement 6 mit im vorliegenden Ausführungsbeispiel zwei Halbschalen 7, 8, welche miteinander drehfest verbunden sind. Primär- und Sekundärelemente 5, 6 sind über eine Federeinrichtung miteinander gekoppelt und um eine Neutralposition gegeneinander verdrehbar. Die Federeinrichtung besteht aus einer Mehrzahl in Umfangsrichtung hintereinander angeordneter Schraubenfedersätzen. Ein Schraubenfedersatz besteht aus jeweils einer Innenfeder 15 und einer diese umgreifenden Außenfeder 15. Benachbarte Schraubenfedersätze sind mit Hilfe von Gleitschuhen 54, welche in der Fachsprache auch als Federaufteiler bezeichnet werden, voneinander beabstandet.

Primär- und Sekundärelemente 5, 6 umfassen jeweils in diametraler Anordnung zwei Mitnehmer, welche jeweils zwischen die in Umfangsrichtung verlaufende Kette der Schraubenfedern 14, 15 eingesetzt sind, so dass ein antriebsseitig an Primärelement 5 eingekoppeltes Drehmoment mittels jeweils eines in der Figur 1 dargestellten Primärmitnehmers 55 zunächst auf die aus den Schraubenfedern 14, 15 bestehende Federkette und von dort auf den jeweiligen korrespondierenden Sekundärmitnehmer 56 des Sekundärelements 6 übertragen wird.

Die beiden Halbschalen 7, 8, nämlich die antriebsseitige Halbschale 8 und die abtriebsseitige Halbschale 7 sind derart ausgebildet, dass sie die aus Schraubenfedern 14 bestehende Kette im Wesentlichen formschlüssig aufnehmen. Beide Halbschalen 9, 10 sind über eine Verzahnung 11 drehfest miteinander verbunden und mit Hilfe eines in eine Umfangsnut der abtriebsseitigen Halbschale 7 eingreifenden Sicherungsrings 13 gegeneinander axial im wesentlichen unverschieblich gesichert. Diese beiden Halbschalen 7, 8 dienen zur vorzugsweise reibungsarmen Führung der Federn 14, 15 bzw. der zwischen den Federn 14, 15 in Umfangsrichtung angeordneten Gleitschuhe 55.

Auch die Doppelkupplung in radial geschachtelter Anordnung selbst ist in an sich üblicher Weise aufgebaut. Sie umfasst zwei Kupplungen K1, K2, wobei das Lamellenpaket der einen Kupplung K2 radial innerhalb des Lamellenpakets der anderen Kupplung K1 angeordnet ist. Darüber hinaus sind beide Lamellenpakete in etwa im gleichen axialen Abschnitt angeordnet. Die Kupplung K1 mit dem radial äußeren Lamellenpaket wird nachfolgend als radial äußere Lamellenkupplung K1, die andere als radial innere Lamellenkupplung K2 bezeichnet.

Die radial äußere Kupplung K1 umfasst einen Außenlamellenträger 30 sowie einen Innenlamellenträger 32. Beide Lamellenträger 30, 32 sind in der Art von Halbschalen ausgebildet. Der zylindrische Teil 57 des Außenlamellenträgers 30 weist am Innenumfang eine Verzahnung 58 auf. In diese Verzahnung 58 greift jeweils in eine entsprechende Außenverzahnung 59 von im vorliegenden Ausführungsbeispiel als Stahllamellen ausgeführten Außenlamellen 36 ein. In korrespondierender Weise weist der zylindrische Teil 60 des Innenlamellenträgers 32 am Außenumfang eine Verzahnung 61 auf, in welche eine entsprechende Innenverzahnung 62 hier als Belaglamellen ausgeführter Innenlamellen 37 eingreift. Außenlamellen 36 und Innenlamellen 37 sind derart zwischen die zylindrischen Bereiche 57, 60 der Außen- bzw. Innenlamellenträger 30, 32 eingeführt, dass in axialer Richtung jeweils auf eine Außenlamelle 36 eine Innenlamelle 37 folgt und umgekehrt. Die Außen- und Innenlamellen 36, 37 sind mittels eines Betätigungskolbens 34 in Reibeingriff und außer Reibeingriff verbringbar.

Die radial innere Kupplung K2 ist prinzipiell in gleicher Weise wie die radial äußere Lamellenkupplung K1 ausgeführt. Auch hier ist ein halbschalenförmiger Außenlamellenträger 31 und ein halbschalenförmiger Innenlamellenträger 33 vorgesehen. Der zylindrische Teil 63 des halbschalenförmigen Außenlamellenträgers 31 weist innenumfangsseitig eine Verzahnung 64 auf, in welche eine Außenverzahnung 65 entsprechender als Stahllamellen ausgeführter Außenlamellen 38 eingreift. Korrespondierend hierzu weist der zylindrische Abschnitt 66 der Innenlamellenträgerhalbschale 33 eine Außenverzahnung 67 auf, welche die Innenverzahnungen 68 entsprechender Innenlamellen 39 aufnimmt.

Eine Innenlamelle 39 ist hiermit benachbart zu zwei Außenlamellen 38, eine Außenlamelle 38 ist benachbart zu zwei Innenlamellen 39 ein Lamellenpaket bildend angeordnet. Die Außen- und Innenlamellen 38, 39 können mit Hilfe eines Betätigungskolbens 35 in Reibeingriff und außer Reibeingriff verbracht werden.

Der Außenlamellenträger 31 der radial inneren Kupplung K2 ist drehfest mit einer Kupplungsnabe 49 verbunden. Weiterhin besteht eine drehfeste Verbindung zwischen dem Außenlamellenträger 30 der radial äußeren Kupplung K1 und einer mit der Kupplungsnabe 49 verschweißten und ein Pumpenantriebszahnrad 24 tragenden Seitenscheibe 48 mit Hilfe einer Steckverzahnung 17. Die Kupplungsnabe 49, welche im Wesentlichen die Form eines Zylinders aufweist, ist um eine Drehachse ax am Außenumfang einer Getriebeeingangswelle 21 drehbar gelagert. Die drehbare Lagerung erfolgt über zwei Radialnadellager 25, 27.

Die Getriebeeingangswelle 21 ist in der Form eines Hohlzylinders ausgeführt. Sie ist von einer weiteren als Vollwelle ausgeführten Getriebeeingangswelle 22 zentral durchsetzt und auf dieser mittels eines Radialnadellagers 50 drehbar gelagert. Die Hohlwelle 21 ist über eine Steckverzahnung 51 mit einer Nabe 29 des Innenlamellenträgers 33 der radial inneren Kupplung K2 verbunden. Die Vollwelle 20 ist über eine Steckverzahnung 52 mit einer Nabe 28 des Innenlamellenträgers 32 der radial äußeren Lamellenkupplung K1 drehfest verbunden.

Die Kupplungsnabe 49 und der mit dieser drehfest verbundene Lamellenträger 30 der radial äußeren Kupplung K1 stellen nunmehr die Eingangsseite der Doppelkupplung dar. Der Innenlamellenträger 32 der radial äußeren Lamellenkupplung K1 und der Innenlamellenträger 33 der Kupplung K2 bilden die Ausgangsseiten der Doppelkupplung. Ein den Außenlamellenträger 30 über bzw. die Kupplungsnabe 49 eingeleitetes Drehmoment wird demzufolge wahlweise je nach Stellung der beiden Betätigungskolben 34, 35 über einen der beiden Innenlamellenträger 31 oder 33 auf eine der beiden Getriebeeingangswellen 20, 21 übertragen.

Die Eingangsseite der Doppelkupplung K1, K2 und die Ausgangsseite des Torsionsschwingungsdämpfers T sind über eine Schweißnaht 47 zwischen abtriebsseitigem Sekundärteilelement 7 und zylindrischem Teil 57 des Außenlamellenträgers 30 der radial äußeren Kupplung K1 starr miteinander verbunden. Weiter besteht eine drehfeste Verbindung zwischen einer Primärnabe 4 des Primärelements 5 und einer Eingangsschwungmasse 46 über eine Steckverzahnung 69. Die Eingangsschwungmasse 46 wiederum ist eingangsseitig mit einer Kurbelwelle 2 verbunden, welche von einem hier nicht dargestellten Verbrennungsmotor angetrieben werden kann.

Geht man nunmehr davon aus, dass von dem hier nicht dargestellten Verbrennungsmotor ein Drehmoment erzeugt wird, so wird dieses über die Kurbelwelle 2, die hier vorgesehene Eingangsschwungmasse 46 auf das Primärelement 5 des Torsionsschwingungsdämpfer T geleitet. Radialschwingungen werden von der Federeinrichtung 14, 15 gedämpft und das Drehmoment wird weiter auf das Sekundärelement 6 übertragen. Das Sekundärelement 6 überträgt das Drehmoment weiter auf den Außenlamellenträger 30 der radial äußeren Kupplung sowie über die Halbschale 48 und die Kupplungsnabe 49 auch auf den Außenlamellenträger 31 der radial inneren Lamellenkupplung K2. Je nach Stellung der Betätigungskolben 34, 35 erfolgt eine Weiterleitung des Drehmoments über einen der beiden Innenlamellenträger 31, 33 auf eine der beiden Getriebeeingangswellen 20, 21.

Wie oben bereits ausgeführt wurde, besteht grundsätzlich das Bedürfnis radiale Kräfte an dem Sekundärelement 6 des Torsionsschwingungsdämpfers T abzulagern. Dies erfolgt im vorliegenden Ausführungsbeispiel dadurch, dass der (ring-) scheibenförmige Teil 70 des Außenlamellenträgers 30 der radial äußeren Kupplung K1 quasi eine Verlängerung der abtriebsseitigen Halbschale 7 des Sekundärelements 7 nach radial innen bildet, am inneren Umfang zylindrisch verläuft und in diesem zylindrischen Innenumfangsbereich mittels eines Radialnadellagers 26 gegen den Außenumfang der Nabe 28 radial gelagert und abgestützt ist. Es wird keine radiale Kraft auf die übrigen Kupplungsbestandteile übertragen, weil durch die Verzahnung 17 zwischen Außenlamellenträger 30 und Seitenscheibe 48 eine gewisse radiale Bewegung zwischen diesen beiden Bauteilen 30, 48 möglich ist.

Das Kupplungsspiel wird über einen Sicherungsring 18 und eine Tellerfeder 19 am Außenrand der Doppelkupplung eingestellt. Die axiale Verschiebbarkeit wird radial innen durch zwei Axialnadellager 42, 43, welche zwischen dem Innenlamellenträger 33 der Innenkupplung K2, dem Innenlamellenträger 32 der radial äußeren Kupplung K1 und dem Außenlamellenträger 30 der radial äußeren Kupplung K1 angeordnet sind, festgelegt.

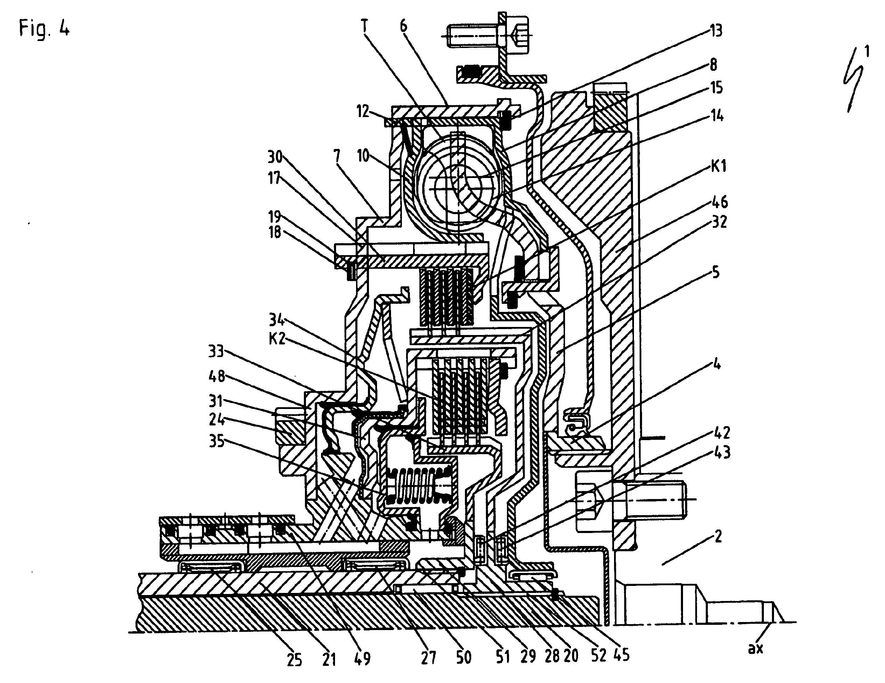

Die Figur 4 zeigt ein viertes Ausführungsbeispiel einer erfindungsgemäßen Kombination 1 aus Torsionsschwingungsdämpfer T und Doppelkupplung K1, K2. Diese Ausführungsvariante ist sehr ähnlich, wie die Kupplungseinrichtung nach der Figur 3 ausgeführt. Auf eine nochmalige Beschreibung übereinstimmender Bestandteile wird daher verzichtet.

Abweichend von der Ausführungsvariante nach der Figur 3 ist hier die Momentenübergabestelle vom Torsionsschwingungsdämpfer T auf die Doppelkupplung K1, K2 nicht an einer Schweißnaht 47 zwischen der abtriebsseitigen Halbschale 10 des Sekundärelements 6 und dem Außenlamellenträger 30, sondern an der Verzahnung 17. Zu diesem Zweck ist die Seitenscheibe 48 als weiteres abtriebsseitiges Sekundärteilelement ähnlich der zu den Figuren 1 und 2 beschriebenen Art ausgebildet.

Die radiale Ablagerung erfolgt bei diesem Ausführungsbeispiel nicht über eine z.T. durch den Außenlamellenträger 30 gebildete abtriebsseitige Halbschale 10 des Sekundärelements 6, wie bei der Ausführungsvariante nach der Figur 3, sondern über die antriebsseitige Halbschale 8, welche zu diesem Zweck nach radial innen verlängert ausgebildet ist, in einen zylindrischen Abschnitt mündet und in diesem Bereich innenumfangsseitig an ein Radialnadellager 45 anschließt, welches auf dem Außenumfang der Nabe 28 des Innenlamellenträgers 32 der radial äußeren Kupplung sitzt.

### Bezugszeichenliste

- 1: Doppelkupplungseinrichtung
- 2: Kurbelwelle
- 4: Primärflansch
- 5: Primärelement
- 6: Sekundärelement
- 7: abtriebsseitiges Sekundärteilelement
- 8: antriebsseitiges Sekundärteilelement
- 9: antriebsseitige Halbschale
- 10: abtriebsseitige Halbschale
- 11: Verzahnung
- 12: Verzahnung
- 13: Sicherungsring
- 14: äußere Schraubenfeder
- 15: innere Schraubenfeder
- 16: Radialnadellager
- 17: Verzahnung
- 18: Sicherungsring
- 19: Federring
- 20: Vollwelle
- 21: Hohlwelle
- 22: Kupplungssupport
- 23: Radialnadellager
- 24: Pumpenantriebszahnrad
- 25: Radialnadellager
- 26: Radialnadellager
- 27: Radialnadellager
- 28: Nabe des Innenlamellenträgers der radial äußeren Kupplung
- 29: Nabe des Innenlamellenträgers der radial inneren Kupplung
- 30: Außenlamellenträger der radial äußeren Kupplung
- 31: Außenlamellenträger der radial inneren Kupplung
- 32: Innenlamellenträger der radial äußeren Kupplung
- 33: Innenlamellenträger der radial inneren Kupplung
- 34: Betätigungskolben der radial äußeren Kupplung
- 35: Betätigungskolben der radial inneren Kupplung
- 36: Außenlamellen der radial äußeren Kupplung
- 37: Innenlamellen der radial äußeren Kupplung
- 38: Außenlamellen der radial inneren Kupplung
- 39: Innenlamellen der radial inneren Kupplung
- 40: Axialnadellager
- 41: Axialnadellager
- 42: Axialnadellager
- 43: Axialnadellager
- 44: Radialnadellager
- 45: Radialnadellager
- 46: Schwungmasse
- 47: Schweißnaht
- 48: Seitenscheibe
- 49: Kupplungsnabe
- 50: Radialnadellager
- 51: Steckverzahnung
- 52: Steckverzahnung
- 53: Halbschale
- 54: Gleitschuh / Federaufteiler
- 55: Primärmitnehmer
- 56: Sekundärmitnehmer
- 57: zylindrischer Teil
- 58: Verzahnung
- 59: Außenverzahnung
- 60: zylindrischer Teil
- 61: Außenverzahnung
- 62: Innenverzahnung
- 63: zylindrischer Teil
- 64: Innenverzahnung
- 65: Außenverzahnung
- 66: zylindrischer Teil
- 67: Außenverzahnung
- 68: Innenverzahnung
- 69: Steckverzahnung
- 70: scheibenförmiger Teil

- K1: radial äußere Kupplung
- K2: radial innere Kupplung
- T: Torsionsschwingungsdämpfer
- ax: Drehachse

## Patentansprüche

1. Kombination (1) aus einem Torsionsschwingungsdämpfer (T) und einer Kupplung (K1 K2),
- wobei der Torsionsschwingungsdämpfer (T) ein antriebsseitiges Primärelement (5) und ein abtriebsseitiges Sekundärelement (6) aufweist, welche federelastisch gekoppelt sind,
- wobei die Kupplung (K1, K2) ein Eingangselement (30, 31) und ein Ausgangselement (32, 33) aufweist, welche in Drehmomentübertragungsverbindung und außer Drehmomentübertragungsverbindung verbringbar sind,
- wobei das Sekundärelement (6) des Torsionsschwingungsdämpfers (T) mit dem Eingangselement (30, 31) der Kupplung (K1, K2) drehmomentübertragend verbunden ist und eine Einrichtung (26) zum Aufnehmen radialer Kräfte aufweist, und
- wobei das Sekundärelement (6) ein der Abtriebsseite zugewandtes Sekundärteilelement (7) umfasst, das drehbar, insbesondere radial, gelagert ist und/oder ein der Antriebsseite zugewandtes Sekundärteilelement (8) umfasst, das drehbar, insbesondere radial, gelagert ist,
**dadurch gekennzeichnet, dass**
das Sekundärelement (6), insbesondere das der Abtriebsseite zugewandte Sekundärteilelement (7) und/oder das der Antriebsseite zugewandte Sekundärteilelement (8), mittelbar oder unmittelbar auf einer Kupplungsnabe (28) der über den Torsionsschwingungsdämpfer (T) mittelbar oder unmittelbar antreibbaren Kupplung (K1), insbesondere Doppelkupplung (K1, K2), drehbar, insbesondere radial, gelagert ist.

2. Kombination (1) aus einem Torsionsschwingungsdämpfer (T) und einer Kupplung (K1, K2) nach Anspruch 1,
**dadurch gekennzeichnet, dass**
das Sekundärelement (6), insbesondere das der Abtriebsseite zugewandte Sekundärteilelement (7) und/oder das der Antriebsseite zugewandte Sekundärteilelement (8), mittelbar oder unmittelbar auf einer Lamellenträgernabe (28) eines Lamellenträgers (32) der über den Torsionsschwingungsdämpfer (T) mittelbar oder unmittelbar antreibbaren Kupplung (K1), insbesondere Doppelkupplung (K1, K2), drehbar, insbesondere radial, gelagert ist.

## Claims

1. Combination (1) of a torsional vibration damper (T) and of a clutch (K1, K2),
- the torsional vibration damper (T) having a drive-side primary element (5) and an output-side secondary element (6) which are coupled spring-elastically, and
- the clutch (K1, K2) having an input element (30, 31) and an output element (32, 33) which can be brought into torque transmission connection and out of torque transmission connection,
- the secondary element (6) of the torsional vibration damper (T) being connected to the input element (30, 31) of the clutch (K1, K2) in a torque-transmitting manner and having a device (26) for the absorption of radial forces, and
- the secondary element (6) comprising a secondary subelement (7) which faces the output side and which is mounted rotatably, in particular radially, and/or comprising a secondary subelement (8) which faces the drive side and which is mounted rotatably, in particular radially,
**characterized in that**
the secondary element (6), in particular the secondary subelement (7) facing the output side and/or the secondary subelement (8) facing the drive side, is mounted rotatably, in particular radially, indirectly or directly on a clutch hub (28) of the clutch (K1), in particular dual clutch (K1, K2), drivable indirectly or directly via the torsional vibration damper (T).

2. Combination (1) of a torsional vibration damper (T) and of a clutch (K1, K2) according to Claim 1, **characterized in that** the secondary element (6), in particular the secondary subelement (7) facing the output side and/or the secondary subelement (8) facing the drive side, is mounted rotatably, in particular radially indirectly or directly on a lamella carrier hub (28) of a lamella carrier (32) of the clutch (K1), in particular dual clutch (K1, K2), drivable indirectly or directly via the torsional vibration damper (T).

## Revendications

1. Combinaison (1) d'un amortisseur de torsion (T) avec un embrayage (K1, K2),
- dans laquelle l'amortisseur de torsion (T) comprend un élément primaire (5) côté entraînement et un élément secondaire (6) côté sortie, qui sont couplés élastiquement par ressort,
- dans laquelle l'embrayage (K1, K2) comporte un élément d'entrée (30, 31) et un élément de sortie (32, 33), qui peuvent être amenés en liaison de transmission de couple de rotation et hors de liaison de transmission de couple de rotation,
- dans laquelle l'élément secondaire (6) de l'amortisseur de torsion (T) est relié en transmission de couple de rotation à l'élément d'entrée (30, 31) de l'embrayage (K1, K2) et présente un dispositif (26) destiné à reprendre les forces radiales, et
- dans laquelle l'élément secondaire (6) comprend un élément partiel secondaire (7) tourné vers le côté de sortie, qui est supporté, en particulier radialement, de façon rotative, et/ou comprend un élément partiel secondaire (8) tourné vers le côté d'entraînement, qui est supporté, en particulier radialement, de façon rotative,
**caractérisée en ce que** l'élément secondaire (6), en particulier l'élément partiel secondaire (7) tourné vers le côté de sortie et/ou l'élément partiel secondaire (8) tourné vers le côté d'entraînement, est supporté, en particulier radialement, de façon rotative, indirectement ou directement sur un moyeu d'embrayage (28) de l'embrayage (K1), en particulier de l'embrayage double (K1, K2), pouvant être entraîné indirectement ou directement au moyen de l'amortisseur de torsion (T).

2. Combinaison (1) d'un amortisseur de torsion (T) avec un embrayage (K1, K2) selon la revendication 1, **caractérisée en ce que** l'élément secondaire (6), en particulier l'élément partiel secondaire (7) tourné vers le côté de sortie, et/ou l'élément partiel secondaire (8) tourné vers le côté d'entraînement, est supporté, en particulier radialement, de façon rotative, indirectement ou directement sur un moyeu porte-lamelles (28) d'un porteur de lamelles (32) de l'embrayage (K1), en particulier de l'embrayage double (K1, K2) pouvant être entraîné indirectement ou directement par l'amortisseur de torsion (T).
